# EUROPEAN PATENT APPLICATION

(11) **EP 4 832 302 A1**
(43) Date of publication of application: **28.10.2026**
(21) Application number: 26172988.3
(22) Date of filing: 17.04.2026
(51) Int. Cl.: H02J 7/70, G06F 3/0354, H02J 7/80

(54) **CHARGING PILE**

(30) Priority: 22.04.2025 CN 202520777961 U
(71) Applicant: Shenzhen Anker Solix Technology Co., Ltd., Shenzhen City, Guangdong (CN)
(72) Inventor: ZHANG, Haijun, Shenzhen (CN); WU, Jiangtao, Shenzhen (CN); LI, Diyi, Shenzhen (CN); DENG, Jianhui, Shenzhen (CN)
(74) Representative: Steffens, Adrian

(57) **Abstract**

Disclosed is a charging pile (100) including: a housing (110) including an outer shell (111) and a touch panel (112) fixedly connected to the outer shell (111); a rectifier module (120) disposed within the housing (110) and configured to rectify alternating current into direct current and supply power to the outside; a touch circuit board (130) disposed within the housing (110) corresponding to the touch panel (112) and having a plurality of capacitive sensors (131) spaced apart from each other, the plurality of capacitive sensors (131) being configured to sense touch operation at different positions of the touch circuit board (130); and a control module (140) electrically connected to both the touch circuit board (130) and the rectifier module (120). The touch circuit board (130) is configured to sense a gesture password inputted when a user touches the touch panel (112), and the control module (140) is configured to control the charging pile (100) to switch a working mode according to the gesture password. By providing the touch panel (112) and the touch circuit board (130), the charging pile (100) may be operated through the gesture password, thereby realizing local control of the charging pile (100), which is convenient when switching a charging mode of the charging pile (100).

## Description

### Field

The present disclosure relates to the technical field of charging piles, in particular to a charging pile.

### Background

Conventional charging piles have only simple functions such as turning on and turning off, and are generally controlled by means such as conventional switch buttons. In the related art, smart charging piles have more charging modes. To switch the charging modes, a user often needs to open a mobile phone application and perform switching in an operation page, that is, needs to rely on a mobile terminal and cannot realize local operation.

### Summary

It is an object of the present disclosure to provide a charging pile configured to switch a charging mode locally.

As a solution, a charging pile according to independent claim 1 is provided. By providing a touch panel and a touch circuit board, a gesture password inputted by a user may be sensed, such that the charging pile can switch a charging mode locally. The dependent claims refer to further embodiments.

In a first aspect, an example of the present disclosure provides a charging pile including: a housing including an outer shell and a touch panel fixedly connected to the outer shell; a rectifier module disposed within the housing and configured to rectify alternating current into direct current and supply power to the outside; a touch circuit board disposed within the housing corresponding to the touch panel and having a plurality of capacitive sensors spaced apart from each other, the plurality of capacitive sensors being configured to sense touch operation at different positions of the touch circuit board; and a control module electrically connected to both the touch circuit board and the rectifier module. The touch circuit board is configured to sense a gesture password inputted when a user touches the touch panel, and the control module is configured to control the charging pile to switch a working mode according to the gesture password.

Beneficial effects: by providing the touch panel and the touch circuit board, the charging pile may be operated through the gesture password, thereby realizing local control of the charging pile, which is convenient when switching a charging mode of the charging pile.

The gesture password may comprise at least one of
- a gesture of sliding along a first direction, and the working state of the charging pile comprises stopping working, and when the touch circuit board senses a gesture of sliding along the first direction, the charging pile stops working, the first direction being a direction from a top of the outer shell to a bottom of the outer shell;
- a gesture of sliding along a second direction, the working state of the charging pile comprises start, and when the touch circuit board senses a gesture of sliding along the second direction, the charging pile starts, the second direction being a direction from a bottom of the outer shell to a top of the outer shell;
- a first graphic gesture password, and the working mode of the charging pile comprises a fast charging mode, and when the touch circuit board senses the first graphic gesture password, the charging pile switches to the fast charging mode;
- a second graphic gesture password, the working mode of the charging pile comprises a green power charging mode, and when the touch circuit board senses the second graphic gesture password, the charging pile switches to the green power charging mode;
- a third graphic gesture password, and the working mode of the charging pile comprises a time-of-use charging mode, and when the touch circuit board senses the third graphic gesture password, the charging pile switches to the time-of-use charging mode; and
- a fourth graphic gesture password, the working mode of the charging pile comprises a direct load control charging mode, and when the touch circuit board senses the fourth graphic gesture password, the charging pile switches to the direct load control charging mode.

At least one groove may be disposed on the touch panel, may preferably extend along the first direction, and may more preferably penetrate through two ends of the touch panel, the first direction being a direction from a top of the outer shell to a bottom of the outer shell.

The touch panel may comprise a base plate and at least two protruding ribs disposed on the base plate. Preferably, the groove may be defined between every two of the protruding ribs. In addition, the protruding rib may comprise a top wall, two first side walls for defining the groove, and two second side walls. More preferably, the top wall may be disposed facing away from the base plate, the two first side walls and the two second side walls may be all connected to the top wall, and the two second side walls may be connected to the two first side walls.

At least one of the first side walls may be disposed obliquely relative to the top wall, preferably, such that an opening size of the groove may be greater than a bottom wall size of the groove; and/or at least one of the second side walls may be disposed obliquely relative to the top wall.

In addition, the charging pile may further comprise a light-emitting assembly configured to indicate a charging state of the charging pile, preferably electrically connected to the control module, and more preferably disposed on the outer shell and/or the touch panel.

The light-emitting assembly may be disposed on the touch panel. Preferably, the touch panel may comprise a plurality of touch regions. In addition, the light-emitting assembly may comprise a plurality of light-emitting members electrically connected to the control module. Preferably, each of the touch regions may correspond to one of the capacitive sensors and one of the light-emitting members. More preferably, any one of the light-emitting members is lit up, extinguished, and changes brightness or color when the corresponding touch region is touched.

A pressure sensor may be provided on the touch circuit board. The pressure sensor may preferably abut against the touch panel to sense pressing operation on the touch panel.

The number of the capacitive sensors may be 10, and preferably, the 10 capacitive sensors may be arranged in a 2 x 5 matrix, and more preferably, each sensor may respectively correspond to 10 Arabic numerals; or the number of the capacitive sensors may be 12. Preferably, the 12 capacitive sensors may be arranged in a 3 x 4 matrix, and more preferably, 10 capacitive sensors among the 12 capacitive sensors may respectively correspond to 10 Arabic numerals.

The charging pile may further comprise a communication module electrically connected to the control module and preferably configured to store the gesture password sent by an external terminal through the communication module.

The touch panel may be a plastic panel. Preferably, the touch panel may be integrated with the outer shell, and more preferably, may have a thickness of 4 mm or more and 5 mm or less.

The outer shell may comprise a frame and a front shell connected to the frame. Preferably, the touch panel may be spaced apart from the frame in a third direction, the third direction being a direction of the touch panel facing away from the touch circuit board.

The front shell may comprise a plurality of inclined panels. Preferably, one end of the plurality of inclined panels may be connected to the frame, and the other end thereof may be connected to the touch panel. More preferably, the plurality of inclined panels may be sequentially connected and distributed around a periphery of the touch panel.

The charging pile may further comprise a charging gun and a plug terminal configured to be plugged and fit with the charging gun. Preferably, the plug terminal may be disposed on one of the inclined panels, and the inclined panel may be disposed on one side of the touch panel in the first direction, the first direction being a direction from a top of the outer shell to a bottom of the outer shell.

### Brief Description of the Drawings

In order to more clearly illustrate technical solutions of examples of the present disclosure, drawings that need to be used in the examples are briefly introduced below, and it will be apparent to those of ordinary skill in the art that the drawings in the following description only show some examples of the disclosure, and other drawings can be obtained in accordance with these drawings without inventive work.
- FIG. 1: is a front structure diagram of a charging pile in an example of the present disclosure;
- FIG. 2: is a structure diagram of a charging pile in another example of the present disclosure;
- FIG. 3: is a block diagram of a charging pile in an example of the present disclosure;
- FIG. 4: is a front structure diagram of a touch panel in an example of the present disclosure;
- FIG. 5: is an enlarged diagram of part A in FIG. 4;
- FIG. 6: is a block diagram of a charging pile in another example of the present disclosure;
- FIG. 7: is a front structure diagram of a touch panel in another example of the present disclosure;
- FIG. 8: is a structure diagram of a touch circuit board in an example of the present disclosure;
- FIG. 9: is a block diagram of a charging pile in yet another example of the present disclosure;
- FIG. 10: is a structure diagram of a housing in an example of the present disclosure;
- FIG. 11: is a side structure diagram of a charging pile in an example of the present disclosure; and
- FIG. 12: is a bottom structure diagram of a charging pile in an example of the present disclosure.

Description of reference signs: 100, charging pile; 110, housing; 111, outer shell; 1111, inclined panel; 1112, frame; 1113, front shell; 112, touch panel; 1121, base plate; 1122, protruding rib; 1123, top wall; 1124, first side wall; 1125, second side wall; 112a, groove; 112b, touch region; 120, rectifier module; 130, touch circuit board; 131, capacitive sensor; 140, control module; 150, light-emitting assembly; 151, light-emitting member; 160, communication module; 170, plug terminal; AA, first direction; BB, second direction; CC, third direction.

### Detailed Description

The technical solutions in the examples of the present disclosure will be clearly and completely described below in conjunction with the accompanying drawings in the examples of the present disclosure. It is clear that the examples described are merely a portion of the examples of the present disclosure, and not all of the examples. Based on the examples in the present disclosure, all other examples obtained by a person of ordinary skill in the art without making inventive labor fall within the scope of protection of the present disclosure.

It should be noted that if the examples of the present disclosure involve a directional indication (such as up, down, left, right, forward, back, etc.), the directional indication is solely used to explain a relative positional relationship, a movement condition, etc., between components in a specific orientation (as shown in the drawings). If the specific orientation is changed, the directional indication is also changed accordingly.

In addition, if there are descriptions involving "first", "second", etc. in the examples of the present disclosure, such descriptions are only for illustrative purposes and should not be understood as indicating or implying relative importance, nor do they implicitly specify the quantity of the indicated technical features. Thereby, a feature defined as "first", "second", etc. may expressly or implicitly include at least one such feature. In the description of the present disclosure, "a plurality of" means at least two, such as two or three, unless otherwise explicitly and specifically defined herein.

In the present disclosure, unless otherwise explicitly specified and defined, terms such as "connect" and "fix" should be understood broadly. For example, "fix" may refer to fixed connection, detachable connection, or integration; may refer to mechanical connection or electrical connection; may refer to direct connection, indirect connection via an intermediary, or internal communication or interaction relationship between two elements, unless otherwise expressly defined. Specific meanings of the above terms in the present disclosure may be understood by those of ordinary skill in the art in light of specific circumstances.

In addition, the technical solutions of the examples of the present disclosure can be combined with each other, but must be based on implementation by a person of ordinary skill in the art. When the combination of the technical solutions is contradictory or cannot be implemented, it should be considered that the combination of the technical solutions does not exist and is not within the scope of protection of the present disclosure.

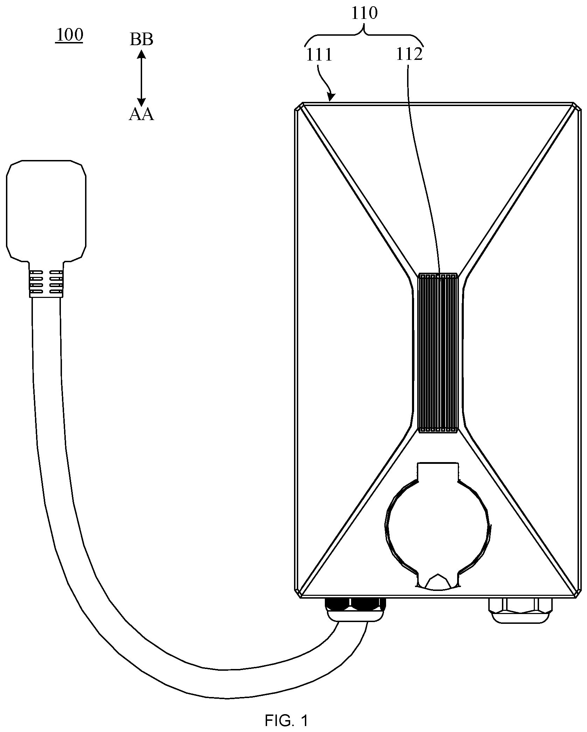

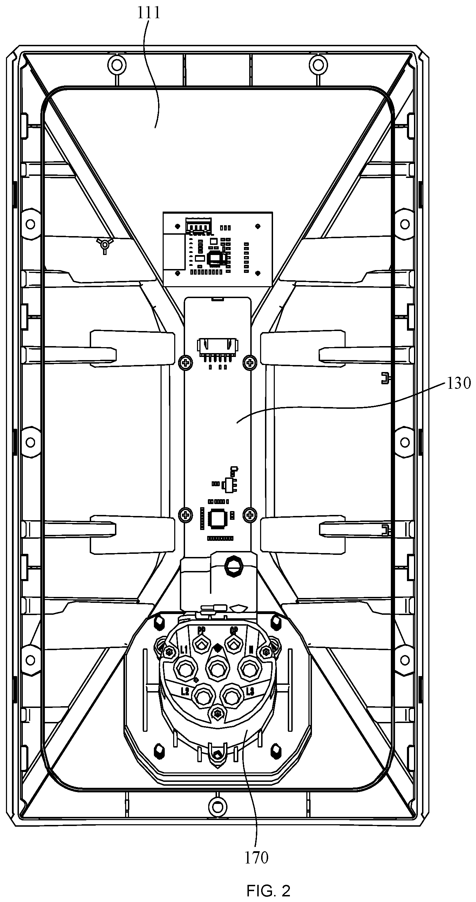

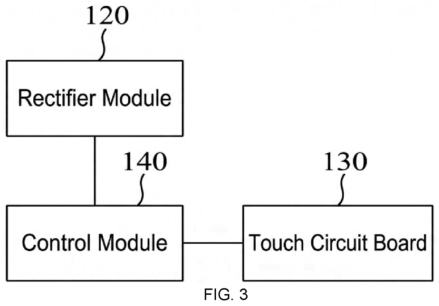

As shown in FIGS. 1 to 3, a first aspect of examples of the present disclosure provides a charging pile 100 including a housing 110, a rectifier module 120, a touch circuit board 130, and a control module 140.

The housing 110 includes an outer shell 111 and a touch panel 112 fixedly connected to the outer shell 111. The touch panel 112 and the outer shell 111 may be fixedly connected by means such as screwing, snap fitting, bonding, and welding. The outer shell 111 is configured to accommodate components such as the rectifier module 120 and the touch circuit board 130, and is configured to protect the components such as the rectifier module 120 and the touch circuit board 130. The touch panel 112 is configured to be touched by a user to operate the charging pile 100.

Optionally, the outer shell 111 may be made of plastic, which has a light weight, low cost, and low processing difficulty, may be injection-molded into various complex shapes, and may achieve an insulation effect. Optionally, the outer shell 111 is made of metal, thus has good heat dissipation performance, and can assist the rectifier module 120 in dissipating heat; has high strength and good bearing performance, is not prone to be damaged, and has a long service life.

Optionally, the touch panel 112 may be made of plastic, which has a light weight, low cost, and low processing difficulty, may be injection-molded into various complex shapes, and may achieve an insulation effect. Optionally, the touch panel 112 is made of metal, which has high strength and good bearing performance, is not prone to be damaged, and has a long service life.

The rectifier module 120 is disposed within the housing 110, and is configured to rectify alternating current into direct current and supply power to the outside. For example, the rectifier module 120 may be a full-wave rectifier circuit, a half-wave rectifier circuit, or the like. The rated input voltage of the rectifier module 120 may be, for example, 110 V, 220 V, or 380 V.

The touch circuit board 130 is disposed within the housing 110 corresponding to the touch panel 112, and is configured to sense touch operation on the touch panel 112. The touch circuit board 130 has a plurality of capacitive sensors 131 spaced apart from each other, each of the capacitive sensors 131 is configured to sense touch operation at one position on the touch circuit board 130, and the plurality of capacitive sensors 131 are configured to sense touch operation at different positions of the touch circuit board 130. When a finger of the user moves on the touch circuit board 130, different gesture passwords may be formed according to different moving trajectories. The touch circuit board 130 can sense the gesture password inputted when the user slidingly touch the touch panel 112.

The gesture password is convenient in operation, may be inputted through a simple gesture without remembering complex password numbers. Moreover, a sliding input is often faster than a tapping input, such that a password input time may be shortened. In addition, the gesture password has higher security. Compared with a numerical password, the gesture password is safter and less easily remembered by an onlooker.

Working modes of the charging pile 100 may include, for example, a fast charging mode, a green power charging mode, a TOU (Time of Use) charging mode, or a DLB (Direct Load Balancing) charging mode.

The fast charging mode can provide a high-power current, shorten a charging time, and improve a use rate of the charging pile 100, which is suitable for a scenario in urgent need of rapid charging, such as a long-distance trip or an emergency.

The green power charging mode uses renewable energy such as solar energy and wind energy to reduce carbon emission, is environmentally friendly and supports sustainable development, which is suitable for a user not in a hurry to charge, and has good economic effectiveness for long-term use.

The TOU charging mode is a mode for optimizing a charging behavior according to an electricity price difference in different time periods, which is suitable for a scenario with a large peak-valley difference in electricity prices. By manually setting charging and discharging time periods, charging is performed in a low-electricity-price time period to save an electricity cost. For example, a low-electricity-price time period at night may be set as the charging time period.

The DLB charging mode is a load balancing technology, which is mainly used to optimize load distribution of the charging pile 100, such that the charging pile 100 may efficiently and evenly provide a charging service for a plurality of electric vehicles. The DLB technology avoids overload of a single charging pile 100 through dynamic adjustment of output power of the charging pile 100, so as to improve an operating efficiency and stability of an entire charging station.

The control module 140 is electrically connected to both the touch circuit board 130 and the rectifier module 120. The control module 140 can receive the gesture password sensed by the touch circuit board 130, and can control the charging pile 100 to switch a working mode according to the gesture password.

There are a plurality of graphics for the gesture password. For example, the graphic of the gesture password may be an L shape, an I shape, a U shape, a V shape, or the like, which is not limited herein. Gesture passwords of different graphics correspond to different commands, and the user may perform personalized setting according to requirements.

For example, the gesture password includes a first graphic gesture password, and the working mode of the charging pile 100 includes the fast charging mode. When the touch circuit board 130 senses the first graphic gesture password, the charging pile 100 switches to the fast charging mode.

The gesture password includes a second graphic gesture password, and the working mode of the charging pile 100 includes the green power charging mode. When the touch circuit board 130 senses the second graphic gesture password, the charging pile 100 switches to the green power charging mode.

The gesture password includes a third graphic gesture password, and the working mode of the charging pile 100 includes the time-of-use charging mode. When the touch circuit board 130 senses the third graphic gesture password, the charging pile 100 switches to the time-of-use charging mode.

The gesture password includes a fourth graphic gesture password, and the working mode of the charging pile 100 includes the direct load control charging mode. When the touch circuit board 130 senses the fourth graphic gesture password, the charging pile 100 switches to the direct load control charging mode.

By providing the touch panel 112 and the touch circuit board 130, the charging pile 100 may be operated through the gesture password, and the control module 140 may control the charging pile 100 to switch the working mode according to the gesture password, thereby realizing local control of the charging pile 100, which is convenient when switching a charging mode, without relying on a mobile phone terminal. Compared with providing a touch screen, the touch panel 112 and the touch circuit board 130 have a lower total cost and a simpler structure, and are not prone to be damaged.

In some examples, the control module 140 can control the charging pile 100 to switch a working state according to the gesture password, that is, the control module 140 can control start and stop of the charging pile 100 according to the gesture password.

For example, the gesture password includes sliding along a first direction AA, and the working state of the charging pile 100 includes stopping working. When the touch circuit board 130 senses a gesture of sliding along the first direction AA, the charging pile 100 stops working. The first direction AA is a direction from the top of the outer shell 111 to the bottom of the outer shell 111, that is, sliding downward may cause the charging pile 100 to stop working.

As another example, the gesture password includes sliding along a second direction BB, and the working state of the charging pile 100 includes start. When the touch circuit board 130 senses a gesture of sliding along the second direction BB, the charging pile 100 starts. The second direction BB is a direction from the bottom of the outer shell 111 to the top of the outer shell 111, that is, sliding upward may cause the charging pile 100 to start.

Since start and stop of the charging pile 100 and switching of the working mode may both be realized by sliding the touch panel 112, other switch buttons may be reduced, and the outer shell 111 has better integrality. The outer shell 111 with good integrality may effectively prevent dust and moisture from entering, which is suitable for outdoor application. Moreover, the outer shell 111 with good integrality has a firm structure, which can resist a physical impact, reduce a damage risk, and prevent the user from contacting an internal circuit to lower an electric shock risk.

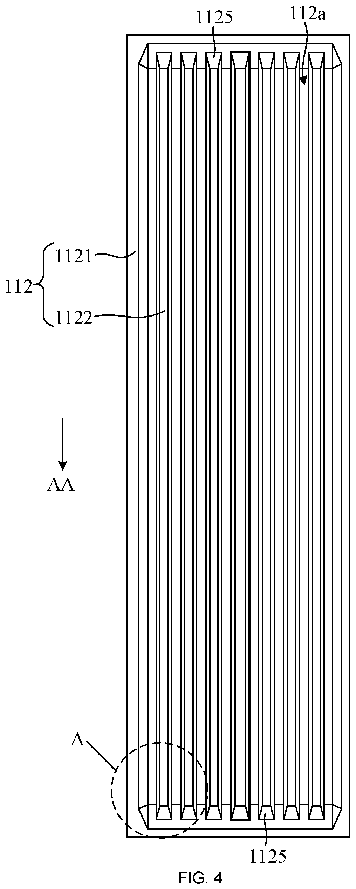

As shown in FIG. 4, in some examples, at least one groove 112a is disposed on the touch panel 112. Each groove 112a extends along the first direction AA and penetrates through two ends of the touch panel 112. After the charging pile 100 is installed, the groove 112a is provided along a vertical direction. The groove 112a may achieve a drainage effect. When the charging pile 100 is used outdoors, a water guiding groove can effectively guide rainwater to be drained and shorten a retention time of the rainwater, so as to avoid accumulated water affecting a touch effect as much as possible, avoid the rainwater damaging the internal circuit of the charging pile 100 as much as possible, and lower the electric shock risk.

As shown in FIG. 4, optionally, a plurality of grooves 112a are evenly spaced, such that drainage effects at different positions of the touch panel 112 are the same.

In some other examples, the surface of the touch panel 112 is a plane, such that the surface of the touch panel 112 is smooth, and a sliding touch thereon is smooth.

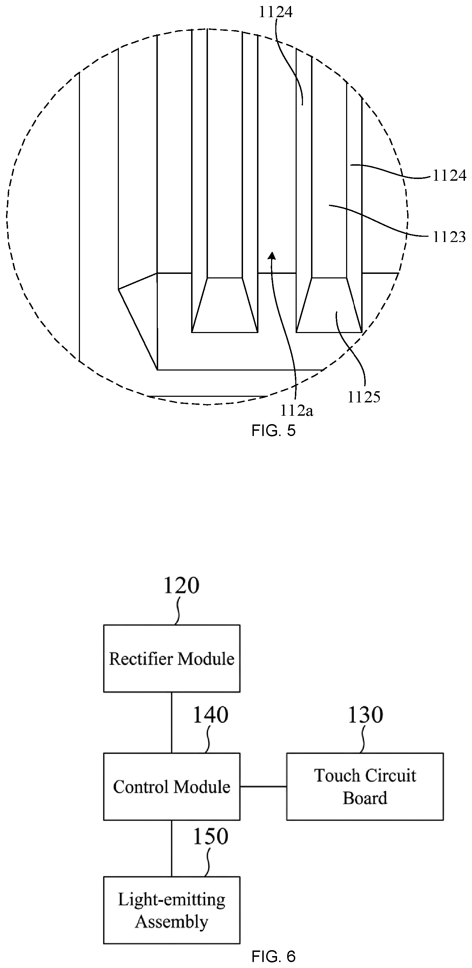

As shown in FIGS. 4 and 5, in some examples, the touch panel 112 includes a base plate 1121 and at least two protruding ribs 1122 disposed on the base plate 1121. The groove 112a is defined between every two protruding ribs 1122. The protruding rib 1122 includes a top wall 1123, two first side walls 1124 for defining the groove 112a, and two second side walls 1125. The top wall 1123 is disposed facing away from the base plate 1121. The two first side walls 1124 and the two second side walls 1125 are all connected to the top wall 1123, and the two second side walls 1125 are connected to the two first side walls 1124.

One of the first side walls 1124 is disposed obliquely relative to the top wall 1123, or the two first side walls 1124 are both disposed obliquely relative to the top wall 1123, such that an opening size of the groove 112a is greater than a bottom wall size of the groove 112a. That is, the groove 112a has a flared shape, which facilitates rainwater discharge and cleaning.

As shown in FIGS. 4 and 5, in some examples, one of the second side walls 1125 is obliquely disposed relative to the top wall 1123, or the two second side walls 1125 are both obliquely disposed relative to the top wall 1123, such that the rainwater flows more smoothly.

As shown in FIG. 6, in some examples, the charging pile 100 further includes a light-emitting assembly 150 configured to indicate a charging state of the charging pile 100, and the light-emitting assembly 150 is electrically connected to the control module 140. The light-emitting assembly 150 may interact with the user and provide instant feedback through a lighting change, which is convenient for the user to use the charging pile 100 and improves an operating experience.

For example, the light-emitting assembly 150 indicates charging in progress, completed, interrupted, or standby through a different color or blinking pattern.

Alternatively, the light-emitting assembly 150 prompts a specific fault, such as an overload or a short circuit, through a specific blinking pattern or color, to prompt that a device requires maintenance, repair, or the like.

Alternatively, the light-emitting assembly 150 can indicate whether a charging gun is plugged into place to guide the user to plug and unplug the charging gun.

Alternatively, the light-emitting assembly 150 warns the user to stop operating in an abnormal situation, prompts a dangerous situation such as high temperature or electric leakage, and reminds the user to pay attention, improving safety.

The light-emitting assembly 150 is disposed on the outer shell 111 or the touch panel 112. For example, the light-emitting assembly 150 may be fixedly connected to the outer shell 111 or the touch panel 112 by means such as screwing, snap fitting, bonding, and welding. The light-emitting assembly 150 may be disposed on the outer shell 111 or the touch panel 112, or the light-emitting assembly 150 may be simultaneously disposed on the outer shell 111 and the touch panel 112.

When the outer shell 111 or the touch panel 112 is of a transparent material, the light-emitting assembly 150 may be disposed on the inner surface of the outer shell 111 or the touch panel 112. Alternatively, the light-emitting assembly 150 may be disposed inside the outer shell 111 or the touch panel 112, that is, the light-emitting assembly 150 is injection-molded in the outer shell 111 or the touch panel 112.

When the outer shell 111 or the touch panel 112 is of an opaque material, the light-emitting assembly 150 may be disposed on the outer surface of the outer shell 111 or the touch panel 112, or the light-emitting assembly 150 may be embedded in the outer surface of the outer shell 111 or the touch panel 112.

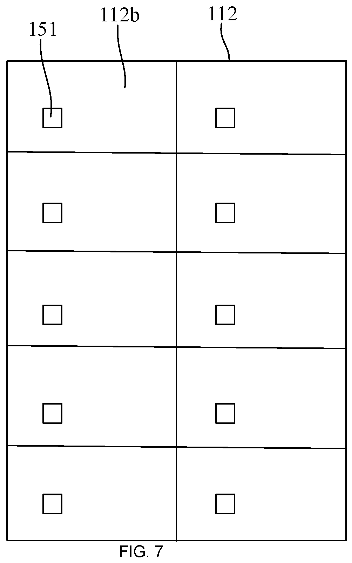

As shown in FIG. 7, in some examples, the light-emitting assembly 150 is disposed on the touch panel 112. The touch panel 112 includes a plurality of touch regions 112b. The light-emitting assembly 150 includes a plurality of light-emitting members 151 electrically connected to the control module 140. Each of the touch regions 112b corresponds to one of the capacitive sensors 131 and one of the light-emitting members 151. Any one of the light-emitting members 151 is lit up, is extinguished, and changes brightness or color when the corresponding touch region 112b is touched.

For example, when the finger of the user slides over the plurality of touch regions 112b, lamp beads corresponding to the plurality of touch regions 112b slid over are lit up, and other lamp beads remain extinguished. The lit-up lamp beads can display a sliding trajectory of the user, that is, can display the graphic of the gesture password to feed back to the user, such that the user can observes whether the inputted gesture password is correct.

Similarly, when the finger of the user slides over the plurality of touch regions 112b, lamp beads corresponding to the plurality of touch regions 112b slid over may be extinguished, and other lamp beads remain lit up, such that the extinguished lamp beads can display a sliding trajectory of the user.

Similarly, when the finger of the user slides over the plurality of touch regions 112b, lamp beads corresponding to the plurality of touch regions 112b slid over may become brighter, and other lamp beads remain the same brightness, such that the brighter lamp beads can display a sliding trajectory of the user.

Similarly, when the finger of the user slides over the plurality of touch regions 112b, lamp beads corresponding to the plurality of touch regions 112b slid over may change into red, and other lamp beads remain green, such that the red lamp beads can display a sliding trajectory of the user.

Optionally, the light-emitting member 151 may be an LED bead, such that the volume is small, the energy consumption is low, and the heat is low.

In some examples, a pressure sensor is provided on the touch circuit board 130. The pressure sensor abuts against the touch panel 112 to sense pressing operation on the touch panel 112. By providing the pressure sensor, a probability of the touch panel 112 being falsely touched may be reduced.

It is understandable that when rain and snow, insects, and the like outside cause interference with the touch panel 112, pressure is often not applied to the touch panel 112 or pressure is negligible, whereas during a process of the user touching the touch panel 112, a certain pressure is often applied to the touch panel 112. Therefore, it is considered that the user is manipulating the touch panel 112 only when the pressure sensor senses a preset pressure, and the gesture password sensed by the touch circuit board 130 is effective at this time.

When the pressure sensor does not sense the preset pressure, it is generally determined to be interference of the outside with the touch panel 112. In this case, even if the gesture password sensed by the touch circuit board 130 is correct, a corresponding command will not be executed.

Optionally, a magnitude of the preset pressure may be adjusted according to a use habit of the user to adapt to different users.

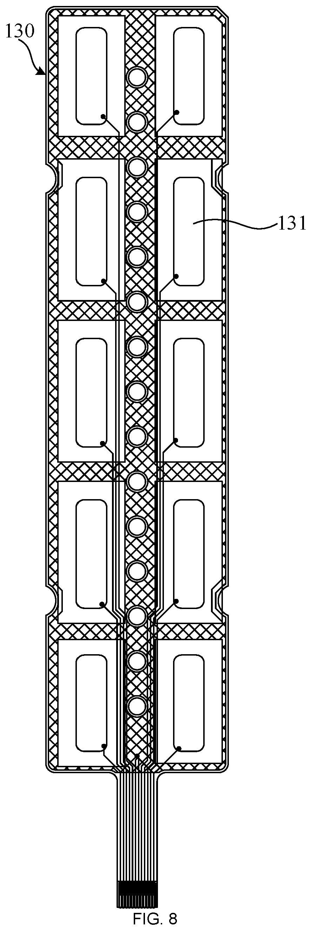

As shown in FIG. 8, in some examples, a plurality of capacitive sensors 131 are arranged in an array, which is convenient for the user to input the gesture password. Optionally, the number of the capacitive sensors 131 is 10, and the capacitive sensors 131 are arranged in a 2 x 5 matrix.

Optionally, the 10 capacitive sensors 131 respectively correspond to 10 Arabic numerals, such that the touch panel 112 can support a tapping password input.

Alternatively, the number of the capacitive sensors 131 is 12, and the capacitive sensors 131 are arranged in a 3 x 4 matrix. Optionally, 10 capacitive sensors 131 among the 12 capacitive sensors 131 respectively correspond to 10 Arabic numerals, such that the touch panel 112 can support a tapping password input.

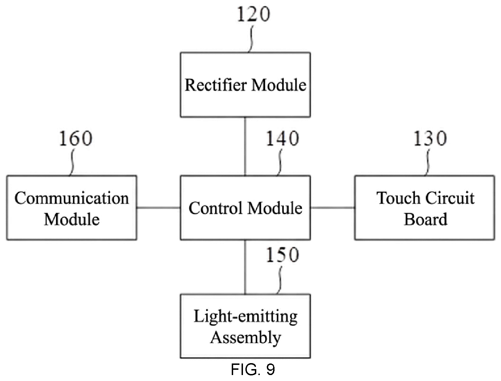

As shown in FIG. 9, in some examples, the charging pile 100 further includes a communication module 160 electrically connected to the control module 140. The communication module 160 can be communicatively connected to an external terminal, for example, communicatively connected to a mobile phone. The user may use a touch screen of the mobile phone to set the gesture password. The control module 140 can store the gesture password sent by the mobile phone through the communication module 160 to realize remote setting of the gesture password.

Optionally, the communication module 160 may be, for example, at least one of a bluetooth module, a wifi module, or a cellular module.

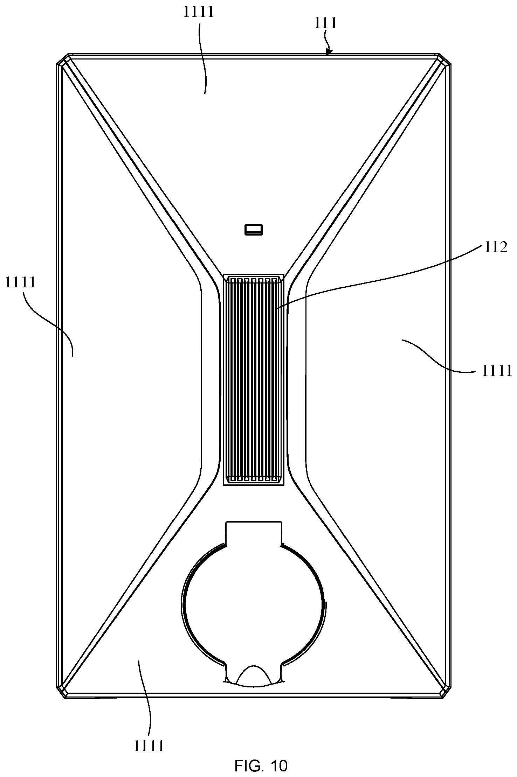

As shown in FIG. 10, in some examples, the touch panel 112 and the outer shell 111 are integrally provided, such that the housing 110 has good integrality. The housing 110 with good integrality can effectively prevent dust and moisture from entering, which is suitable for outdoor application. Moreover, the housing 110 with good integrality has a firm structure, which can resist a physical impact, reduce a damage risk, and prevent the user from contacting the internal circuit, to lower the electric shock risk.

Optionally, the thickness of the touch panel 112 is 4 mm or more and 5 mm or less, such that the touch panel 112 not only has a suitable structural strength but also ensures touch sensitivity.

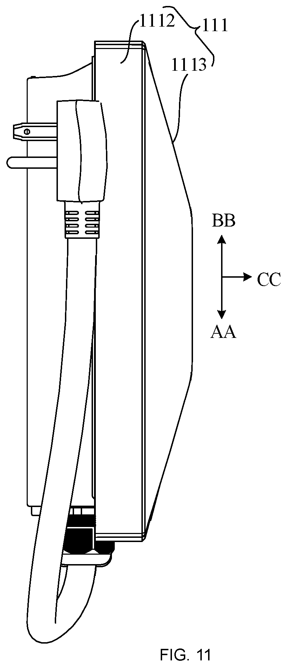

As shown in FIGS. 10 and 11, in some examples, the outer shell 111 includes a frame 1112 and a front shell 1113 connected to the frame 1112. The touch panel 112 is spaced apart from the frame 1112 in a third direction CC. The third direction CC is a direction of the touch panel 112 facing away from the touch circuit board 130.

The front shell 1113 includes a plurality of inclined panels 1111. One end of the plurality of inclined panels 1111 is connected to the frame 1112, and the other end thereof is connected to the touch panel 112. The plurality of inclined panels 1111 are sequentially connected and distributed around a periphery of the touch panel 112. That is, the front shell 1113 protrudes relative to the frame 1112.

By providing the plurality of inclined panels 1111, the outer shell 111 may have a certain slope in all directions, which is convenient for rainwater to flow down and reduces accumulated water of the housing 110.

As shown in FIG. 10, optionally, the number of the inclined panels 1111 is four, and the inclined panels 1111 are respectively connected to an upper edge, a lower edge, a left edge, and a right edge of the touch panel 112.

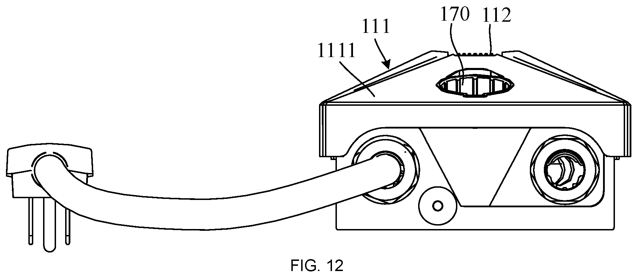

As shown in FIG. 12, in some examples, the charging pile 100 further includes a charging gun and a plug terminal 170 configured to be plugged and fit with the charging gun. The plug terminal 170 is disposed on one of the inclined panels 1111. The inclined panel 1111 is disposed on one side of the touch panel 112 in the first direction AA, that is, the plug terminal 170 is disposed on the inclined panel 1111 below the touch panel 112, such that the plug terminal 170 can be obliquely disposed facing downward to avoid water entering the plug terminal 170 as much as possible.

In some examples, the touch panel 112 has a thickness of 4 mm to 5 mm, and thus not only has high strength, but also enables the touch circuit board 130 to sense a touch on the touch panel 112.

In some examples, the touch circuit board 130 is a flexible circuit board. The thickness of the touch circuit board 130 is approximately 0.2 mm, which is space-saving. The touch circuit board 130 is directly adhered to the inner wall of the touch panel through a 3M adhesive.

The above are only preferred examples of the present disclosure and do not limit the scope of the disclosure. Under the conception of the present disclosure, transformation of an equivalent structure made with the contents of the specification and drawings of the present disclosure, or direct/indirect application in other related technical fields, should all be included in the protection scope of the present disclosure.

## Claims

1. A charging pile (100) comprising:
- a housing (110) comprising an outer shell (111) and a touch panel (112) fixedly connected to the outer shell (111);
- a rectifier module (120) disposed within the housing (110) and configured to rectify alternating current into direct current and supply power to the outside;
- a touch circuit board (130) disposed within the housing (110) corresponding to the touch panel (112) and having a plurality of capacitive sensors (131) spaced apart from each other, the plurality of capacitive sensors (131) being configured to sense touch operation at different positions of the touch circuit board (130); and
- a control module (140) electrically connected to both the touch circuit board (130) and the rectifier module (120),
wherein the touch circuit board (130) is configured to sense a gesture password inputted when a user touches the touch panel (112), and the control module (140) is configured to control the charging pile (100) to switch a working mode and/or a working state according to the gesture password.

2. The charging pile (100) of claim 1, wherein
- the gesture password comprises a gesture of sliding along a first direction, and the working state of the charging pile (100) comprises stopping working, and when the touch circuit board (130) senses a gesture of sliding along the first direction, the charging pile (100) stops working, the first direction being a direction from a top of the outer shell (111) to a bottom of the outer shell (111); and/or
- the gesture password comprises a gesture of sliding along a second direction, the working state of the charging pile (100) comprises start, and when the touch circuit board (130) senses a gesture of sliding along the second direction, the charging pile (100) starts, the second direction being a direction from a bottom of the outer shell (111) to a top of the outer shell (111).

3. The charging pile (100) of claim 1 or 2, wherein
- the gesture password comprises a first graphic gesture password, and the working mode of the charging pile (100) comprises a fast charging mode, and when the touch circuit board (130) senses the first graphic gesture password, the charging pile (100) switches to the fast charging mode; and/or
- the gesture password comprises a second graphic gesture password, the working mode of the charging pile (100) comprises a green power charging mode, and when the touch circuit board (130) senses the second graphic gesture password, the charging pile (100) switches to the green power charging mode; and/or
- the gesture password comprises a third graphic gesture password, and the working mode of the charging pile (100) comprises a time-of-use charging mode, and when the touch circuit board (130) senses the third graphic gesture password, the charging pile (100) switches to the time-of-use charging mode; and/or
- the gesture password comprises a fourth graphic gesture password, the working mode of the charging pile (100) comprises a direct load control charging mode, and when the touch circuit board (130) senses the fourth graphic gesture password, the charging pile (100) switches to the direct load control charging mode.

4. The charging pile (100) of any one of the preceding claims, wherein at least one groove (112a) is disposed on the touch panel (112), extends along the first direction, and penetrates through two ends of the touch panel (112), the first direction being a direction from a top of the outer shell (111) to a bottom of the outer shell (111).

5. The charging pile (100) of claim 4, wherein the touch panel (112) comprises a base plate (1121) and at least two protruding ribs (1122) disposed on the base plate (1121), the groove (112a) is defined between every two of the protruding ribs (1122), the protruding rib (1122) comprises a top wall (1123), two first side walls (1124) for defining the groove (112a), and two second side walls (1125), the top wall (1123) is disposed facing away from the base plate (1121), the two first side walls (1124) and the two second side walls (1125) are all connected to the top wall (1123), and the two second side walls (1125) are connected to the two first side walls (1124).

6. The charging pile (100) of claim 5, wherein
- at least one of the first side walls (1124) is disposed obliquely relative to the top wall (1123), such that an opening size of the groove (112a) is greater than a bottom wall size of the groove (112a); and/or
- at least one of the second side walls (1125) is disposed obliquely relative to the top wall (1123).

7. The charging pile (100) of any one of the preceding claims, further comprising a light-emitting assembly (150) configured to indicate a charging state of the charging pile (100), electrically connected to the control module (140), and disposed on the outer shell (111) and/or the touch panel (112).

8. The charging pile (100) of claim 7, wherein the light-emitting assembly (150) is disposed on the touch panel (112), the touch panel (112) comprises a plurality of touch regions (112b), the light-emitting assembly (150) comprises a plurality of light-emitting members (151) electrically connected to the control module (140), each of the touch regions (112b) corresponds to one of the capacitive sensors (131) and one of the light-emitting members (151), and any one of the light-emitting members (151) is lit up, extinguished, and changes brightness or color when the corresponding touch region is touched.

9. The charging pile (100) of any one of the preceding claims, wherein a pressure sensor is provided on the touch circuit board (130), and abuts against the touch panel (112) to sense pressing operation on the touch panel (112).

10. The charging pile (100) of any one of the preceding claims, wherein
- the number of the capacitive sensors (131) is 10, and the 10 capacitive sensors (131) are arranged in a 2 x 5 matrix and respectively correspond to 10 Arabic numerals; or
- the number of the capacitive sensors (131) is 12, the 12 capacitive sensors (131) are arranged in a 3 x 4 matrix, and 10 capacitive sensors (131) among the 12 capacitive sensors (131) respectively correspond to 10 Arabic numerals.

11. The charging pile (100) of any one of the preceding claims, further comprising a communication module (160) electrically connected to the control module (140) and configured to store the gesture password sent by an external terminal through the communication module (160).

12. The charging pile (100) of any one of the preceding claims, wherein the touch panel (112) is a plastic panel, is integrated with the outer shell (111), and has a thickness of 4 mm or more and 5 mm or less.

13. The charging pile (100) of any one of the preceding claims, wherein the outer shell (111) comprises a frame (1112) and a front shell (1113) connected to the frame (1112), and the touch panel (112) is spaced apart from the frame (1112) in a third direction, the third direction being a direction of the touch panel (112) facing away from the touch circuit board (130).

14. The charging pile (100) of claim 13, wherein the front shell (1113) comprises a plurality of inclined panels (1111), one end of the plurality of inclined panels (1111) is connected to the frame (1112), and the other end thereof is connected to the touch panel (112), and the plurality of inclined panels (1111) is sequentially connected and distributed around a periphery of the touch panel (112).

15. The charging pile (100) of claim 14, further comprising a charging gun and a plug terminal (170) configured to be plugged and fit with the charging gun, wherein the plug terminal (170) is disposed on one of the inclined panels (1111), and the inclined panel (1111) is disposed on one side of the touch panel (112) in the first direction, the first direction being a direction from a top of the outer shell (111) to a bottom of the outer shell (111).
